# EUROPEAN PATENT SPECIFICATION

(11) **EP 3 457 086 B1**
(45) Date of publication and mention of the grant of the patent: **29.12.2021**
(21) Application number: 18159664.4
(22) Date of filing: 02.03.2018
(51) Int. Cl.: G01C 21/34, G06Q 10/04, G06Q 30/02, G08G 1/00

(54) **CONGESTION AVOIDANCE SUPPORT SYSTEM AND CONGESTION AVOIDANCE SUPPORT METHOD**
STAUVERMEIDUNGSUNTERSTÜTZUNGSSYSTEM UND STAUVERMEIDUNGSUNTERSTÜTZUNGSVERFAHREN
SYSTÈME ET PROCÉDÉ DE SUPPORT D'ÉVITEMENT DE CONGESTION

(30) Priority: 13.09.2017 JP 2017176081
(43) Date of publication of application: 20.03.2019
(73) Proprietor: Hitachi, Ltd., Tokyo 100-8280 (JP)
(72) Inventor: ZHONG, Ying, Tokyo 100-8280 (JP); MATSUDA, Takumi, Tokyo 100-8280 (JP); TOMITA, Naofumi, Tokyo 100-8280 (JP); NAGANO, Hirofumi, Tokyo 100-8280 (JP); OYAMATSU, Masayuki, Tokyo 100-8280 (JP); AKASHI, Takuya, Tokyo 100-8280 (JP)
(74) Representative: Strehl Schübel-Hopf & Partner

(56) References cited:
- US-A1- 2012 271 717
- US-A1- 2016 069 689
- US-A1- 2017 146 351
- US-A1- 2017 184 411

## Description

### CROSS-REFERENCE TO RELATED APPLICATION

This application claims priority pursuant to 35 U.S.C. §119 from Japanese Patent Application No. 2017-176081, filed on September 13, 2017.

### BACKGROUND

The present invention relates to a congestion avoidance support system and a congestion avoidance support method, and specifically relates to a technique that provides an effective incentive so as to efficiently achieve congestion avoidance, while taking into consideration trend and policy of travelers as well as road situation.

Traffic congestion may not only cause disadvantage to travelers involved therein, but also may bring about decrease in customer attraction rate or customer satisfaction degree for an event promoter using the road as an access way, or decrease in construction efficiency for a contractor of construction work being performed on the road.

Accordingly, there is proposed as prior art for avoiding traffic congestion described above, for example, a detour route guiding system (see Japanese Patent Application Laid-Open Publication No. 2011-203784) that combines a navigation system with a company point service through which a plurality of companies provide common company points for a consumer's purchasing items/services so as to assist guiding the consumer to a detour route in order to avoid traffic congestion when the consumer is heading for the destination, the navigation system being configured to search a route from the consumer's current position to the destination on the basis of specification of the destination by the consumer and perform mapping of the route on map information, further perform mapping, on the map information, of information relating to the company existing on the route, and display the map information on a screen of a terminal used by the consumer, the navigation system further having a company point management server being operated by a staff office running the company point service, the company point management server having: a management unit configured to hold and manage information relating to the company and information relating to the company point possessed by the company, information of items/services sold by the company and information relating to prices of the items/services and number of the company points provided; a use-of-points processing unit configured to move, upon the consumer's purchasing the items/services from the company, the company points corresponding to the number of points provided for the items/services from the company to the consumer, in the information held by the management unit, and move, upon the consumer's using the company points possessed by the consumer, the company points used by the consumer from the consumer to the company, in the information held by the management unit; a point market management unit configured to move, upon receiving an order to sell or buy the company points from respective companies, the company points from the seller company to the buyer company, in the information held by the management unit; and a navigation coordinating unit configured to acquire information relating to the route from the navigation system, acquire, from the management unit, information relating to the company existing on the route, and information of the items/services sold by respective companies, the company points to be provided when the consumer has purchased each of the items/services, and extra points to be provided when the consumer, having purchased the items/services from the company existing on the route, has arrived at the destination, output the information to the navigation system, and further, upon detecting a congestion route in which traffic congestion has occurred or traffic congestion is expected to occur, change the extra points to be provided when the consumer has purchased the items/services from the company existing on the congestion route so as to be provided when the consumer has purchased the items/services from the company existing on the detour route for the congestion route.

There is proposed, as in the related art, a technique for guiding consumers or the like to a detour route by providing points to the consumers.

However, convenience or thoughts of respective travelers who may be involved in traffic congestion are different from each other, and therefore it is very uncertain whether or not simply presenting an incentive actually results in detouring behavior. For example, when there are few travelers attracted by the incentive in comparison with their own convenience or policy, there will naturally be few travelers making a detouring behavior and avoidance of traffic congestion cannot be expected. On the other hand, there is another concern that in a case where travelers somehow attracted by the incentive are gathering on a single road to make a detouring behavior, traffic congestion may occur on the road, which may propagate to surrounding roads.

In addition, fixing the content of incentive regardless of the situation of traffic congestion or movement of the traveler, may keep the operation cost high due to provision of an inappropriately high incentive despite that the traffic congestion can be easily avoided. Alternatively, there may arise a concern that congestion avoidance cannot be achieved as a result of providing a low incentive which is unlikely to induce a detouring behavior despite that avoidance of traffic congestion is difficult.

Therefore, it is an object of the present invention to provide a technique that provides an effective incentive so as to efficiently achieve congestion avoidance, while taking into consideration trend and policy of travelers as well as road situation.

A method for generating personalized routes for client devices of users in a cloud-based incentive server, taking into account incentives for detours as well as traffic data, is disclosed in US 2017/146351 A1. A navigations system for re-routing of vehicles based on measured frustration levels of users is disclosed in US 2017/184411 A1. US 2016/069689 A1 discloses shopping navigation method providing shopping detours to users during traffic congestions. A method for providing purchasing incentives on predicted travel routes including the recording of prior transaction log in a prior transaction log is disclosed in US 2012/271717 A1.

### SUMMARY

The congestion avoidance support system and the congestion avoidance support method of the present invention for solving the aforementioned problem are defined in the independent claims.

According to the present invention, it becomes possible to provide an effective incentive so as to efficiently achieve congestion avoidance, while taking into consideration trend and policy of travelers as well as road situation.

### BRIEF DESCRIPTION OF THE DRAWINGS

FIG. 1 illustrates a network configuration of a congestion avoidance support system of the present embodiment;
FIG. 2 illustrates an exemplary hardware configuration of a service provider apparatus according to the present embodiment;
FIG. 3 illustrates an exemplary hardware configuration of a requestor terminal according to the present embodiment;
FIG. 4 illustrates an exemplary hardware configuration of a navigation terminal according to the present embodiment;
FIG. 5 illustrates an exemplary hardware configuration of an incentive provider terminal according to the present embodiment;
FIG. 6A illustrates an exemplary arrangement of requestor information in a service provider DB of the present embodiment;
FIG. 6B illustrates an exemplary arrangement of driver information in the service provider DB of the present embodiment;
FIG. 6C illustrates an exemplary arrangement of incentive provider information in the service provider DB of the present embodiment;
FIG. 7 illustrates an exemplary arrangement of requestor information in a requestor DB of the present embodiment;
FIG. 8A illustrates an exemplary arrangement of driver information in a driver DB of the present embodiment;
FIG. 8B illustrates an exemplary arrangement of travel lifelog information in the driver DB of the present embodiment;
FIG. 8C illustrates an exemplary arrangement of policy information in the driver DB of the present embodiment;
FIG. 8D illustrates an exemplary arrangement of policy definition information in the driver DB of the present embodiment;
FIG. 9 illustrates an exemplary arrangement of incentive provider information in an incentive provider DB of the present embodiment;
FIG. 10A illustrates an exemplary arrangement of request information in a distributed ledger of the present embodiment;
FIG. 10B illustrates an exemplary arrangement of coupon issuance information in the distributed ledger of the present embodiment;
FIG. 10C illustrates an exemplary arrangement of coupon acquisition information in the distributed ledger of the present embodiment;
FIG. 10D illustrates an exemplary arrangement of use-of-coupon information in the distributed ledger of the present embodiment;
FIG. 11A illustrates an exemplary arrangement of matching candidate information in the distributed ledger of the present embodiment;
FIG. 11B illustrates an exemplary arrangement of matching result information in the distributed ledger of the present embodiment;
FIG. 11C illustrates an exemplary arrangement of detailed statement information in the distributed ledger of the present embodiment;
FIG. 12 illustrates an exemplary flow 1 of a congestion avoidance support method according to the present embodiment;
FIG. 13 illustrates an exemplary flow 2 of the congestion avoidance support method according to the present embodiment; and
FIG. 14 illustrates an exemplary money flow in the congestion avoidance support method of the present embodiment.

### DETAILED DESCRIPTION OF EMBODIMENTS

### --- Network Configuration ---

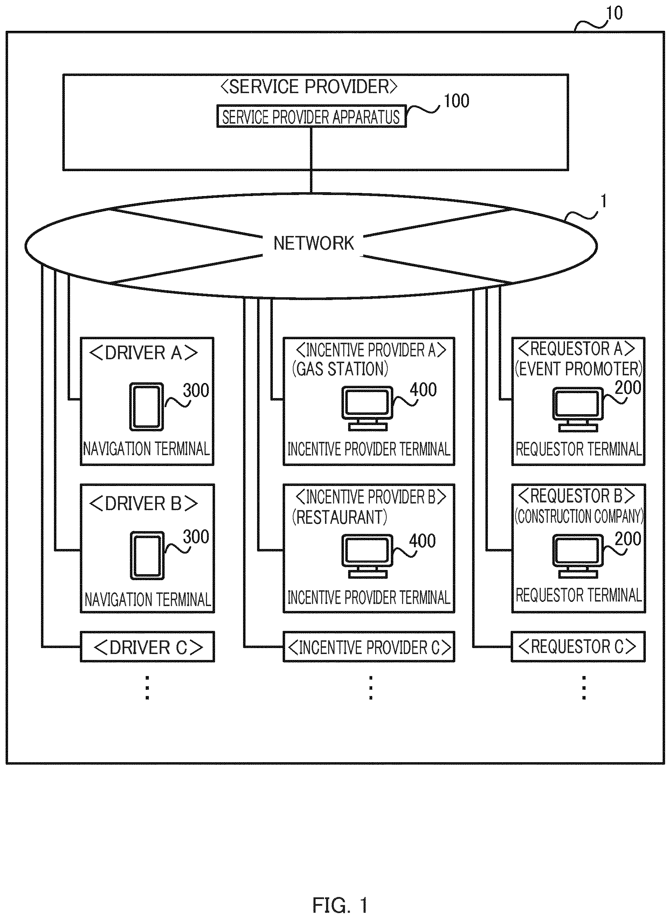

Embodiments of the present invention will be described in detail below, referring to the drawings. FIG. 1 illustrates an exemplary network configuration of a congestion avoidance support system 10 of the present embodiment. The congestion avoidance support system 10 illustrated in FIG. 1 is a computer system that provides an effective incentive so as to efficiently avoid congestion, while taking into consideration trend and policy of travelers as well as road situation.

The congestion avoidance support system 10 illustrated in FIG. 1 includes, as an example, a service provider apparatus 100, a requestor terminal 200, an incentive provider terminal 400, and a navigation terminal 300, which are communicably connected to each other via a network 1, which turns out to be a P2P network.

Among the aforementioned components, the service provider apparatus 100 is an information processing apparatus that generates and distributes an incentive to be used as a reward for taking a detour route, which may result in congestion avoidance, and performs management of information of the road crowdedness situation to be used therefor. The service provider apparatus 100 is operated by a business operator providing the service of congestion avoidance support. Although there is no limitation with regard to the type of incentive, the present embodiment will be described assuming, as an example, a coupon which is usable for discount when purchasing items or services.

In addition, the requestor terminal 200 is a terminal operated by a party subject to disadvantage due to occurrence of congestion. Here, the party subject to disadvantage may be any party such as, for example, an event promoter, construction company, an autonomous community, or the like.

In the case of an event promoter or a construction company, occurrence of congestion on a road surrounding an event site or a construction site may generate undesired cost for deploying a large number of traffic control personnel, or cost for requesting transportation companies to provide temporary transportation service, in order to avoid a situation such as causing delay of transportation of event participants or construction personnel, or a situation such as causing inconvenience in daily routines of nearby residents. Additionally, in the case of an autonomous community, occurrence of congestion on a surrounding road due to an event of a school managed by the autonomous community may also generate undesired cost for deploying a large number of traffic control personnel in order to avoid a situation such as causing inconvenience in daily routines of nearby residents or companies.

A party as described above therefore is supposed to operate the requestor terminal 200 to notify the service provider apparatus 100 of a request to avoid congestion on the road surrounding an event site, a construction site, or a school.

In addition, the navigation terminal 300 is a navigation device used by a driver of a car for route search or the like. The navigation terminal 300, the details of which will be described below, generates a detour route on the basis of the request to avoid congestion or the trend of the car to be navigated, presents the generated path to the driver so as to induce a detouring behavior. In addition, the navigation terminal 300 holds information of a coupon distributed from the service provider apparatus 100 and, when the car actually has run along the detour route, acquires and makes usable the coupon for the driver.

In addition, the incentive provider terminal 400 is a terminal of a store at which the driver is supposed to use the coupon. The driver, using the coupon acquired by making the aforementioned detouring behavior, is supposed to receive a discount of the purchase price of an item or service at the store. On the other hand, the incentive provider terminal 400 notifies the service provider apparatus 100 of the purchasing behavior accompanied with such use of the coupon, and receives a payment equivalent to the discount amount as an achievement reward.

Note that respective devices connected to each other via the aforementioned network 1 correspond to nodes in the distributed ledger system. In other words, the congestion avoidance support system 10 of the present embodiment is included in the distributed ledger system.

In the distributed ledger system, a node referred to as a "minor" (which may be any node, and is assumed to be the service provider apparatus 100, for example) determines the validity relating to data, i.e., transaction data, that arises in each event upon execution of the congestion avoidance support method over the P2P network, and performs a settlement process through a task of calculating a particular hash value referred to as proof-of-work.

The transaction data settled in the aforementioned manner are grouped into a single block and recorded in a distributed ledger referred to as a blockchain. The distributed ledger, being equally provided to respective nodes, is kept in synchronization among the nodes.

Note that although FIG. 1 illustrates four types of nodes, i.e., the service provider apparatus 100, the requestor terminal 200, the navigation terminal 300, and the incentive provider terminal 400, the types of nodes are not limited thereto.

In addition, although a settlement process using proof-of-work has been presented in the description above as an exemplary validity determination of transaction data, the approaches to be employed in the congestion avoidance support system 10 of the present embodiment is not limited thereto.

Here, the blockchain technique will be outlined. Major characteristics of blockchain include (1) settling the process not by a centralized organization but by reaching an agreement or approval by (any or particular) participants, (2) making falsification virtually impossible by grouping a plurality of sets of transaction data into a block, recording the sets of data in the distributed ledger in a cascaded manner, and calculating hash values for successive blocks, and (3) allowing all the participants to confirm the process by sharing the same ledger data (distributed ledger) by all the participants.

According to the aforementioned characteristics, the blockchain technique is under study for application to a wide range of fields such as finance, IoT (Internet of Thing), or the like, as a mechanism for managing/sharing reliable data, or executing/ managing business transactions on the basis of contracts. Using an infrastructure providing such a blockchain (referred to as blockchain infrastructure, in the following) allows information sharing or execution of business transactions among a plurality of entities without being managed by a centralized organization (for example, a plurality of companies or the like related to a consortium or supply chain of a particular industry).

It is assumed that the congestion avoidance support system 10 of the present embodiment of the present invention is being operated on the basis of the aforementioned technical background.

### --- Hardware Configuration ---

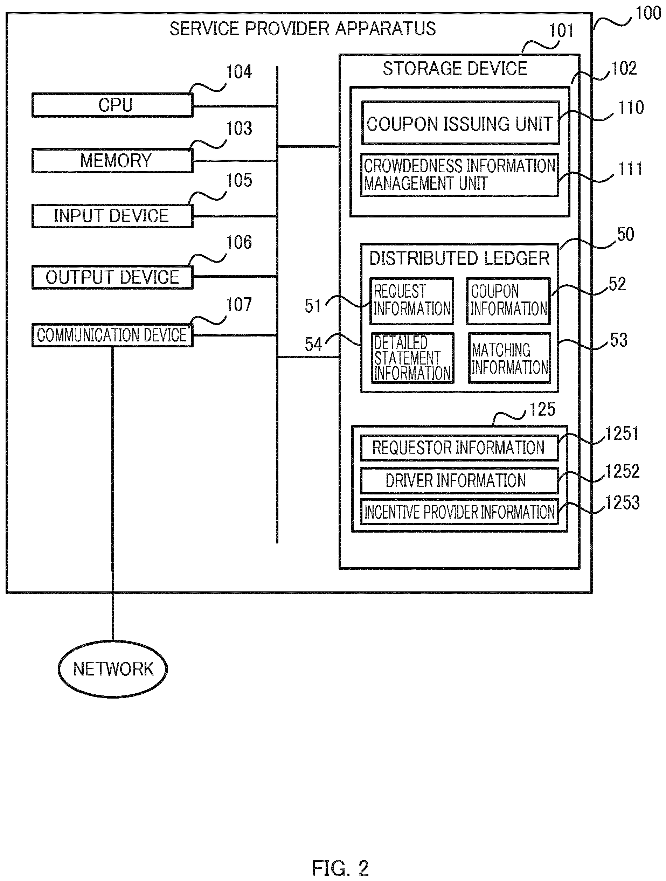

In addition, the hardware configuration of respective devices included in the congestion avoidance support system 10 will be described. FIG. 2 illustrates an exemplary hardware configuration of the service provider apparatus 100 according to the present embodiment.

The service provider apparatus 100 according to the present embodiment has provided therein a storage device 101 including suitable nonvolatile storage elements such as an SSD (Solid State Drive) or a hard disk drive, a memory 103 including volatile storage elements such as a RAM, a CPU 104 configured to read a program 102 stored in the storage device 101 into the memory 103 and execute the program 102 to control the service provider apparatus 100 as a whole and also performs various determinations, as well as operational and control processes, an input device 105 configured to receive keyboard input or voice input from a user, an output device 106 such as a display configured to display processed data, and a communication device 107 connected to the network 1 to perform communication processing with other devices.

Note that the storage device 101 has stored therein at least a distributed ledger 50 and a service provider DB 125, in addition to the program 102 for implementing a functional unit (a coupon issuing unit 110 and a crowdedness information management unit 111) required for the service provider apparatus 100 of the present embodiment. Details of the distributed ledger 50 and the service provider DB 125 will be described below.

Among the aforementioned functional units, the coupon issuing unit 110 receives a request to avoid congestion from the requestor terminal 200, identifies the content of the coupon to be distributed using a predetermined algorithm on the basis of the road to be avoided during congestion in the request (stored in request information 51 of the distributed ledger 50) and the crowdedness situation of the road (information acquired from the crowdedness information management unit 111), and distributes information of the coupon to the navigation terminal 300 of each driver, on the basis of information of respective drivers (driver information 1252 in the service provider DB 125).

In addition, the crowdedness information management unit 111 is a functional unit configured to acquire, maintain, and manage information indicating the crowdedness situation of the road and the result of transition prediction thereof from a predetermined system of an autonomous community or a public corporation managing respective roads, for example. The crowdedness information management unit 111 provides the coupon issuing unit 110 with information relating to the crowdedness situation.

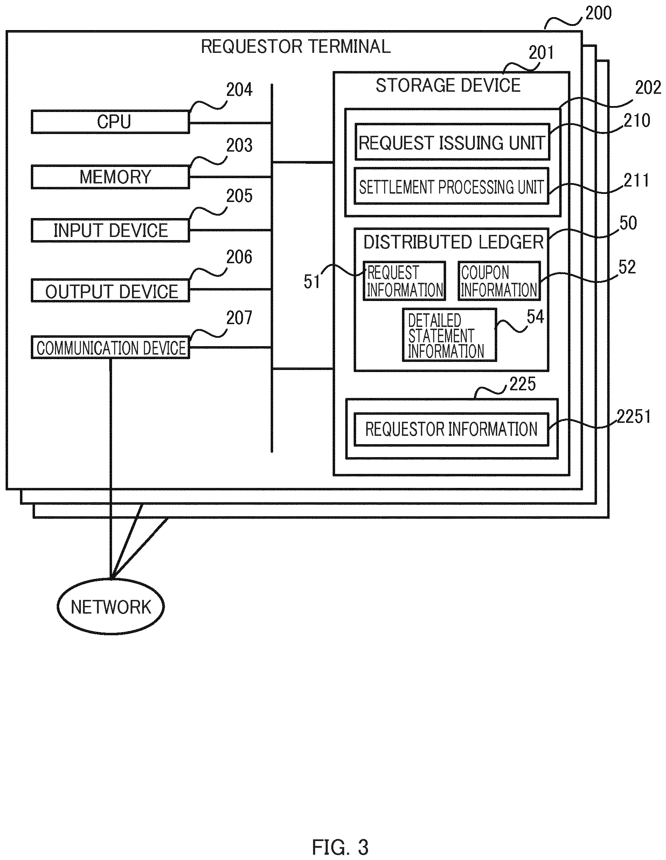

In addition, FIG. 3 illustrates an exemplary hardware configuration of the requestor terminal 200 according to the present embodiment.

The requestor terminal 200 according to the present embodiment has provided therein a storage device 201 including suitable nonvolatile storage elements such as an SSD (Solid State Drive) or a hard disk drive, a memory 203 including volatility storage elements such as a RAM, a CPU 204 configured to read a program 202 stored in the storage device 201 into the memory 203 and execute the program 202 to control the requestor terminal 200 as a whole and also performs various determinations, as well as operational and control processes, an input device 205 configured to receive keyboard input or voice input from a user, an output device 206 such as a display configured to display processed data, and a communication device 207 connected to the network 1 to perform communication processing with other devices.

Note that the storage device 201 has stored therein at least the distributed ledger 50 and a requestor DB 225, in addition to the program 202 for implementing a functional unit required for the requestor terminal 200 of the present embodiment. Details of the distributed ledger 50 and the requestor DB 225 will be described below.

Among the aforementioned functional units, a request issuing unit 210 is a functional unit configured to notify the service provider apparatus 100 of the request to avoid congestion via the network 1, according to the instruction from the user who received by the input device 205. Note that the request is supposed to include information relating to the requestor (requestor information) such as an event promoter, a construction company, or an autonomous community, which is the user of the requestor terminal 200.

In addition, a settlement processing unit 211 is a functional unit configured to perform, for a service provider and an incentive provider, a settlement process of an amount payable which has arisen on the basis of a contract or the like between the service provider which has undertaken coupon distribution service and a store, i.e., the incentive provider, at which a driver has made a purchasing behavior accompanied with the use of the coupon, and is also a functional unit configured to generate and issue transaction data corresponding to detailed statement information 54 described below. The settlement processing unit 211 therefore issues transaction data with regard to the discount amount in the actual result of a purchasing behavior accompanied with the use of the coupon and, after having performed validity determination thereof, manages the information via the detailed statement information 54 of the distributed ledger 50.

Note that the aforementioned amount payable is assumed to be the agency fee of the coupon distribution service paid to the service provider, the discount amount paid to the incentive provider when the driver used the coupon, or the like. In addition, the settlement processing itself is a process performed in terms of a financial transaction executed as defined by the rule of the service using an existing net banking service provided by a financial institution.

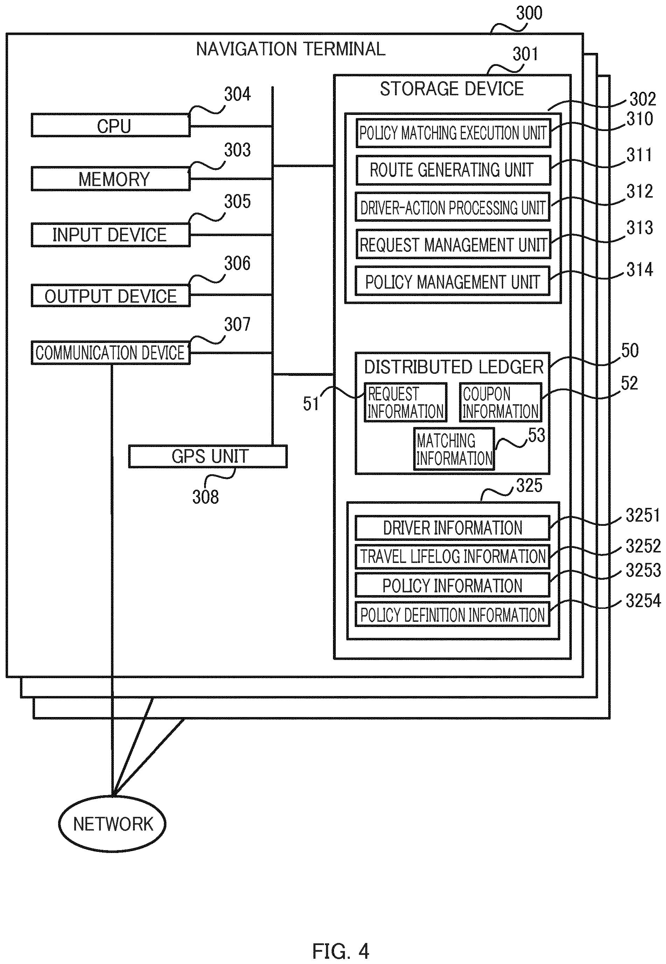

In addition, FIG. 4 illustrates an exemplary hardware configuration of the navigation terminal 300 according to the present embodiment.

The navigation terminal 300 according to the present embodiment has provided therein a storage device 301 including suitable nonvolatile storage elements such as an SSD (Solid State Drive) or a hard disk drive, a memory 303 including volatility storage elements such as a RAM, a CPU 304 configured to read a program 302 stored in the storage device 301 into the memory 303 and execute the program 302 to control the navigation terminal 300 as a whole and also performs various determinations, as well as operational and control processes, an input device 305 configured to receive keyboard input or voice input from a user, an output device 306 such as a display configured to display processed data, a communication device 307 connected to the network 1 to perform communication processing with other devices, and a GPS unit 308 which is similar to those provided in existing navigation devices. The GPS unit 308, being a unit configured to receive positioning radio wave from a positioning satellite and measure the position of a vehicle of interest, is supposed to provide position information of the vehicle of interest to a route generating unit 311 described below.

Note that the storage device 301 has stored therein at least the distributed ledger 50 and a driver DB 325, in addition to the program 302 for implementing a functional unit required for the navigation terminal 300 of the present embodiment. Details of the distributed ledger 50 and the driver DB 325 will be described below.

Among the aforementioned functional units, a policy matching execution unit 310 is a functional unit configured to receive coupons distributed from the service provider apparatus 100, and identify one, among the received coupons, that exhibits a match between what to be avoided during congestion (e.g., period requested to be detoured or area requested to be detoured, which are indicated by the request information 51 of the distributed ledger 50, etc.) in the corresponding request, and the driver's actual travel trend (travel lifelog information 3252 of the driver DB 325), and also a match between a predetermined property in the request (e.g., request type indicated by the request information 51 of the distributed ledger 50) and the driver's travel policy (specified by policy information 3253 and policy definition information 3254 in the driver DB 325, e.g., "avoid school-commuting road and school bus route").

In addition, the route generating unit 311 is a functional unit configured to identify a detour route using a general route search algorithm on the basis of a coupon identified by the policy matching execution unit 310 described above and a request corresponding to the coupon, and output information of the detour route to the output device 306, besides the general functions of searching a route from a vehicle of interest to a predetermined destination in cooperation with the GPS unit 308, and generating route information for drivers.

In addition, a driver-action processing unit 312 is a functional unit configured to identify whether or not the driver has run along a detour route generated by the route generating unit 311, i.e., the situation of driver action against the detour route, on the basis of travel lifelog information 3252 and, when the driver has run along the detour route, distribute the transaction data indicating that the driver has acquired the corresponding coupon to the network 1 and, after having performed validity determination thereof, hold the transaction data in coupon acquisition information 522 in the coupon information 52 of the distributed ledger 50.

In addition, a request management unit 313 is a functional unit configured to manage the request to avoid congestion from the requestor via the request information 51 of the distributed ledger 50.

In addition, a policy management unit 314 is a functional unit configured to manage the driver's travel policy via the policy information 3253 and the policy definition information 3254 in the driver DB 325.

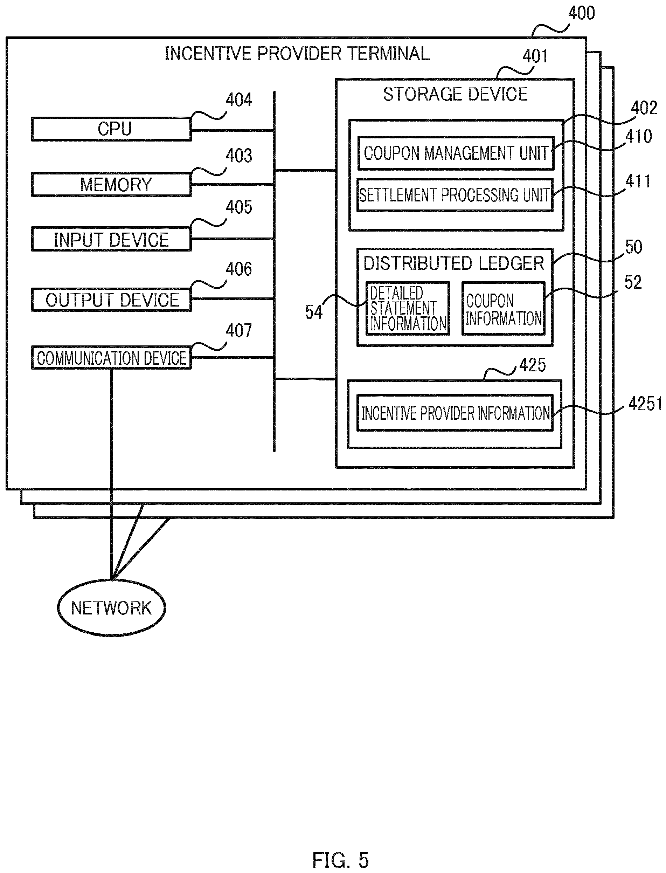

In addition, FIG. 5 illustrates an exemplary hardware configuration of the incentive provider terminal 400 according to the present embodiment.

The incentive provider terminal 400 according to the present embodiment has provided therein a storage device 401 including suitable nonvolatile storage elements such as an SSD (Solid State Drive) or a hard disk drive, a memory 403 including volatile storage elements such as a RAM, a CPU 404 configured to read a program 402 stored in the storage device 401 into the memory 403 and execute the program 402 to control the incentive provider terminal 400 as a whole and also performs various determinations, as well as operational and control processes, an input device 405 configured to receive keyboard input or voice input from a user, an output device 406 such as a display configured to display processed data, and a communication device 407 connected to the network 1 to perform communication processing with other devices.

Note that the storage device 401 has stored therein at least the distributed ledger 50 and an incentive provider DB 425, in addition to the program 402 for implementing a functional unit required for the incentive provider terminal 400 of the present embodiment. Details of the distributed ledger 50 and the incentive provider DB 425 will be described below.

Among the aforementioned functional units, a coupon management unit 410 is a functional unit configured to manage, in the distributed ledger 50, coupon information 52 including coupon issuance information 521 including number of sheets, content, or the like, of the coupons distributed from the service provider apparatus 100 to the navigation terminal 300, the coupon acquisition information 522 including information of the coupon acquired by the driver for having run along a detour route, and use-of-coupon information 523 indicating the actual result of the driver's using the acquired coupon at a store, i.e., the incentive provider.

In addition, the settlement processing unit 411 is a functional unit configured to perform settlement processing (including processing of the discount by the coupon) of an amount payable occurred by a purchasing behavior (purchasing and using an item or service from an incentive provider) accompanied with the driver's using the coupon.

### --- Exemplary Data Structure ---

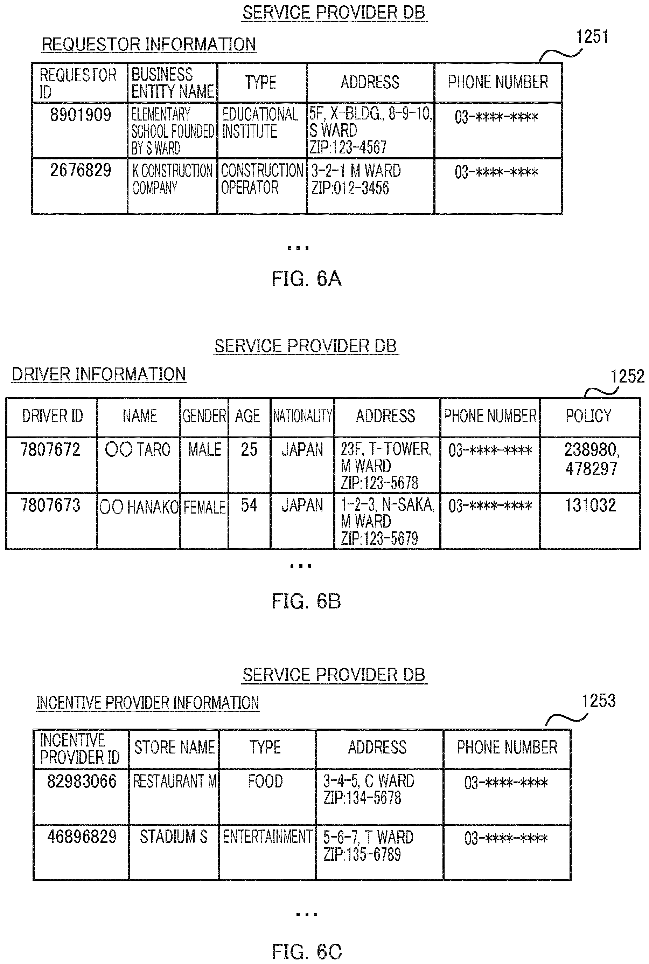

Subsequently, tables to be used by the congestion avoidance support system 10 of the present embodiment will be described. FIG. 6A illustrates an example of requestor information 1251 in the service provider DB 125 of the present embodiment.

The requestor information 1251 of the present embodiment is a table having accumulated therein requests to avoid congestion received from the requestor terminal 200. The data structure of the table is a set of records that associate together values such as business entity name, type, address, and contact information such as a phone number of a requestor, using as the key the requestor ID uniquely indicating the requestor.

In addition, FIG. 6B illustrates an example of driver information 1252 in the service provider DB 125 of the present embodiment.

The driver information 1252 of the present embodiment is a table having accumulated therein information of drivers preliminarily collected from the drivers.

The data structure of the table is a set of records that associate together values such as name, gender, age, nationality, address, phone number, and policy of a driver, using as the key the driver ID uniquely indicating the driver. Among the data entries, the value of policy is the ID of the driver's travel policy.

In addition, FIG. 6C illustrates an example of incentive provider information 1253 in the service provider DB of the present embodiment.

The incentive provider information 1253 of the present embodiment is a table having accumulated therein respective incentive provider information preliminarily collected from incentive providers.

The data structure of the table is a set of records that associate together values such as store name, type, address, and phone number of an incentive provider, using as the key the incentive provider ID uniquely indicating the incentive provider.

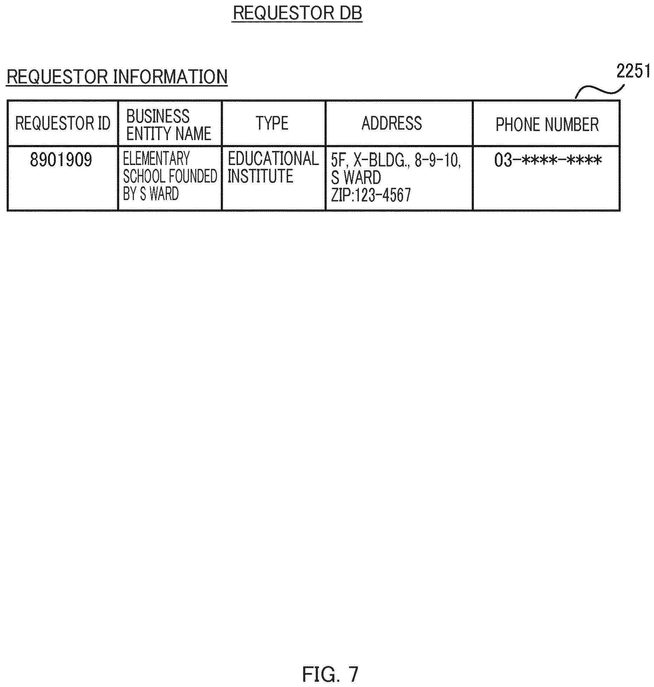

In addition, FIG. 7 illustrates an example of requestor information 2251 in the requestor DB 225 of the present embodiment.

The requestor information 2251 of the present embodiment is a table having stored therein information relating to requestors managing the information.

The data structure of the table is a set of records that associate together values such as business entity name, type, address, and phone number of a requestor, using as the key the requestor ID uniquely indicating the requestor.

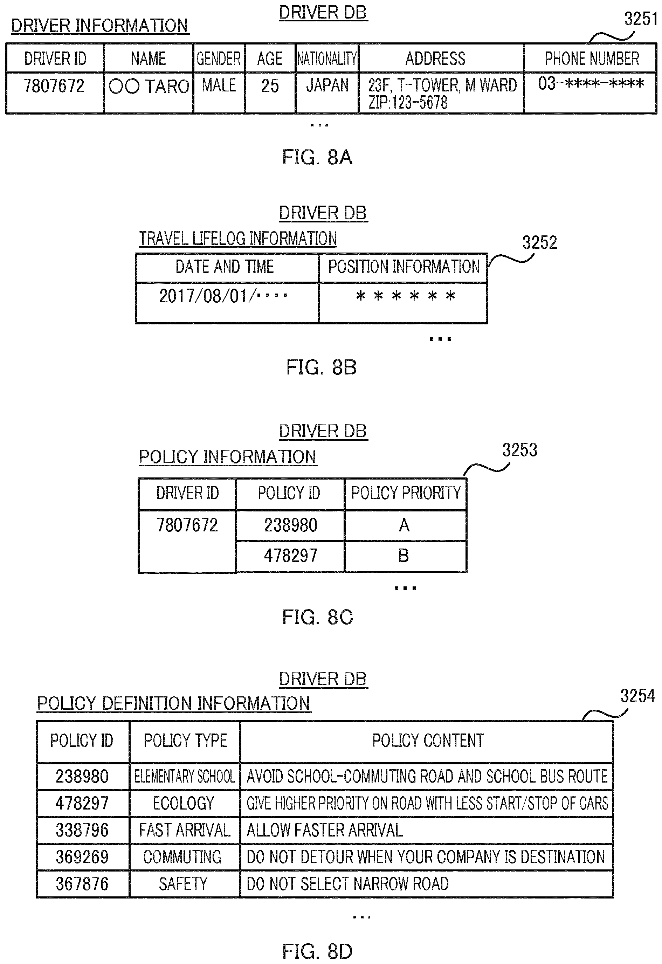

In addition, FIG. 8A illustrates an example of driver information in the driver DB 325 of the present embodiment.

The driver information 3251 of the present embodiment is a table having stored therein information of drivers managing the information.

The data structure of the table is a set of records that associate together values such as name, gender, age, nationality, address, and phone number of a driver, using as the key the driver ID uniquely indicating the driver.

In addition, FIG. 8B illustrates an example of travel lifelog information 3252 in the driver DB 325 of the present embodiment.

The travel lifelog information 3252 of the present embodiment is a table having accumulated therein history information of a vehicle of interest acquired from the GPS unit 308 of the navigation terminal 300 as the driver's run history.

The data structure of the table is a set of records that associate together values of position information (coordinate values in the GPS) of a vehicle of interest acquired from the GPS unit 308, using as the key the date and time information.

In addition, FIG. 8C illustrates an example of policy information 3252 in the driver DB of the present embodiment.

The policy information 3253 of the present embodiment is a table having stored therein information of travel policies of drivers. The data structure of the table is a set of records that associate together values such as policy ID, which is the identification information of a driver's policy with regard to travel, and priority of the policy, using the driver ID uniquely indicating the driver as the key.

Note that the policy ID described above is an ID of a policy selected by the driver from a policy list (policy definition information 3254) preliminarily defined by the service provider or the like. In addition, the policy priority is intended to define the priority among travel policies in a case where the driver has a plurality of travel policies.

In addition, FIG. 8D illustrates an example of policy definition information 3254 in the driver DB 325 of the present embodiment.

The policy definition information 3254 of the present embodiment is a table having stored therein information of travel policies preliminarily defined by the service provider or the like.

The data structure of the table is a set of records that associate together values such as type and content of a travel policy, using as the key the policy ID uniquely indicating the travel policy. Note that the aforementioned policy type expresses the characteristics of the travel policy in a straightforward manner.

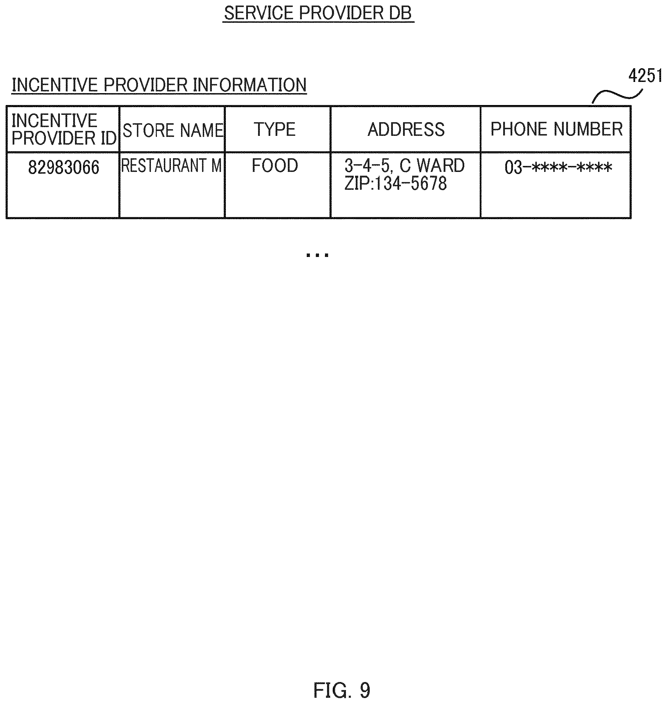

In addition, FIG. 9 illustrates an example of incentive provider information 4251 in the incentive provider DB 425 of the present embodiment.

The incentive provider information 4251 of the present embodiment is a table having stored therein information relating to stores of incentive providers.

The data structure of the table is a set of records that associate together values such as name, type, address, and phone number of a store, which is an incentive provider, using as the key the incentive provider ID uniquely indicating the incentive provider.

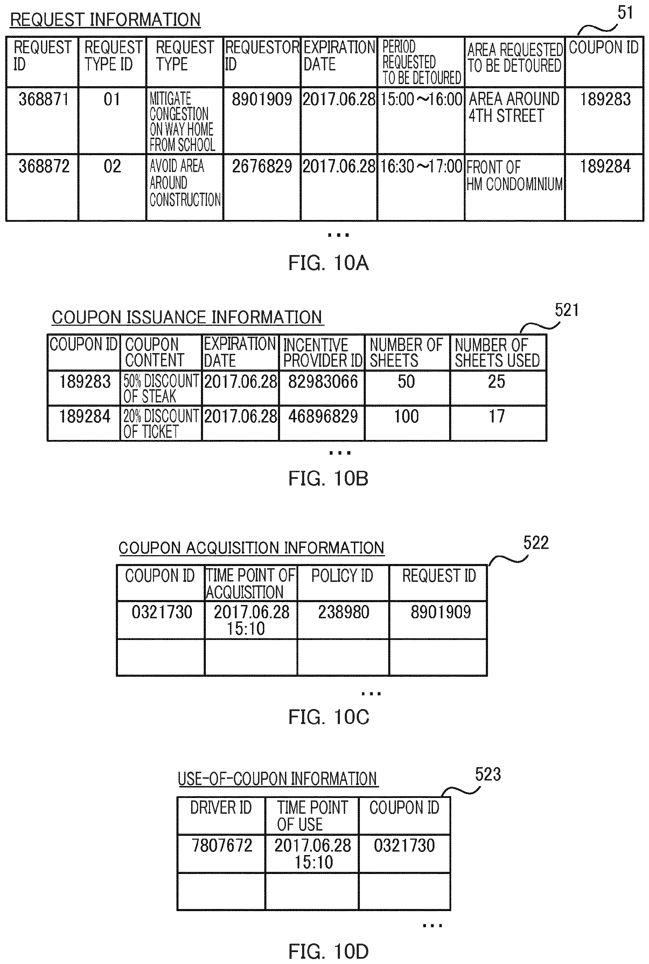

In addition, FIG. 10A illustrates an example of the request information 51 in the distributed ledger 50 of the present embodiment.

The request information 51 of the present embodiment is a block having accumulated therein transaction data issued by the requestor terminal 200 upon notification of a request to avoid congestion.

The data structure of the block is a set of transaction data that associate together values such as request type ID indicating a type of a request, type of request, requestor ID, expiration date, period requested to be detoured, area requested to be detoured, and coupon number of a coupon generated and distributed with regard to the request, using as the key the request ID uniquely indicating the transaction accompanied with the request.

In addition, FIG. 10B illustrates an example of the coupon issuance information 521 in the distributed ledger 50 of the present embodiment.

The coupon issuance information 521 of the present embodiment is a block having accumulated therein transaction data issued by the service provider apparatus 100 upon distribution of a coupon.

The data structure of the table is a set of transaction data that associate together values such as content, expiration date, incentive provider ID, number of sheets issued and distributed, and number of sheets used, using as the key the coupon ID uniquely indicating the coupon.

In addition, FIG. 10C illustrates an example of the coupon acquisition information 522 in the distributed ledger 50 of the present embodiment.

The coupon acquisition information 522 of the present embodiment is a block having accumulated therein transaction data issued by the navigation terminal 300 with regard to an event for which a coupon acquired (made usable) by a driver who has run along a detour route provided by the route generating unit 311.

The data structure of the table is a set of transaction data associating together values such as acquisition time, policy number, request number, using the coupon ID uniquely indicating the coupon as the key.

Among the data entries, the policy ID is the ID of the travel policy of the driver who has acquired the coupon, the validity of the travel policy having been confirmed by the matching with regard to the coupon. In addition, the request ID is the ID of the request that has caused issuance of the coupon.

In addition, FIG. 10D illustrates an example of the use-of-coupon information 523 in the distributed ledger 50 of the present embodiment.

The use-of-coupon information 523 of the present embodiment is a block having accumulated therein transaction data issued by the navigation terminal 300 in accordance with an event for which a driver, who has acquired a coupon, used the coupon at an incentive provider.

The data structure of the block is a set of transaction data that associate together values such as time of use of a coupon and coupon ID of the coupon, using as the key the driver ID uniquely indicating the driver who has used the coupon.

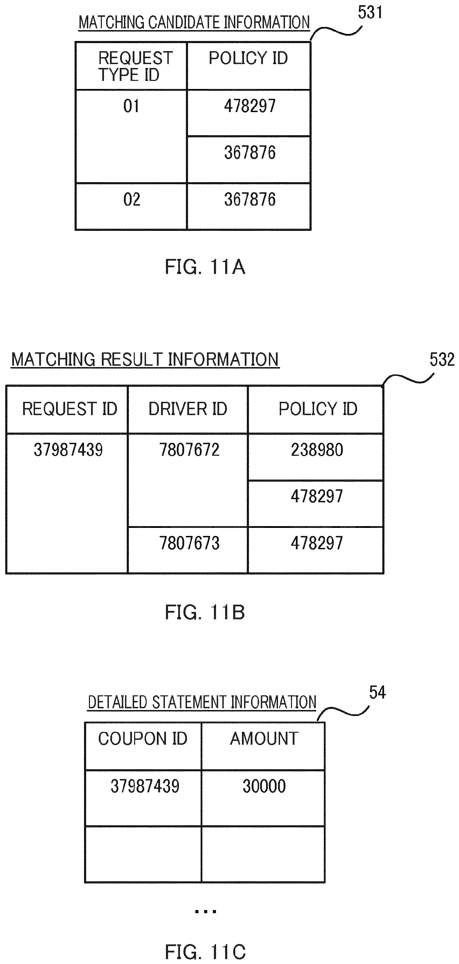

In addition, FIG. 11A illustrates an example of matching candidate information 531 in the distributed ledger 50 of the present embodiment.

The matching candidate information 531 of the present embodiment is information defining the correspondence relation between a type of a request to avoid congestion and a travel policy that matches the type of the request. The matching candidate information 531 is assumed to be transaction data issued by one of the nodes for an event specified by a qualified person in terms of the aforementioned correspondence relation.

The data structure of the information is a set of transaction data that associate together values of the policy ID of the travel policy that matches the request type, using as the key the request type ID.

In addition, FIG. 11B illustrates an example of matching result information 532 in the distributed ledger 50 of the present embodiment.

The matching result information 532 of the present embodiment is a block having accumulated therein transaction data issued by the navigation terminal 300 which has identified the driver whose travel policy matches with regard to the request corresponding to the coupon distributed from the service provider apparatus 100. The data structure of the block is a set of transaction data that associate together values such as driver ID and policy ID, using the request ID as the key.

In addition, FIG. 11C illustrates an example of the detailed statement information 54 in the distributed ledger 50 of the present embodiment. The detailed statement information 54 of the present embodiment is a block having accumulated therein transaction data issued by the requestor terminal 200 that has generated the actual result information of the discount amount upon the driver's using the coupon at the incentive provider.

The data structure of the block is a set of transaction data that associate together values such as the amount discounted by the incentive provider due to a purchasing behavior accompanied with the use of the coupon, using as the key the coupon ID uniquely indicating the used coupon.

### --- Exemplary Flow 1 ---

An actual procedure of the congestion avoidance support method according to the present embodiment will be described below, referring to the drawings. Various operations corresponding to the congestion avoidance support method described below are realized by a program read into the memory or the like and executed by respective nodes included in the congestion avoidance support system 10. The program includes various codes for performing various operations described below.

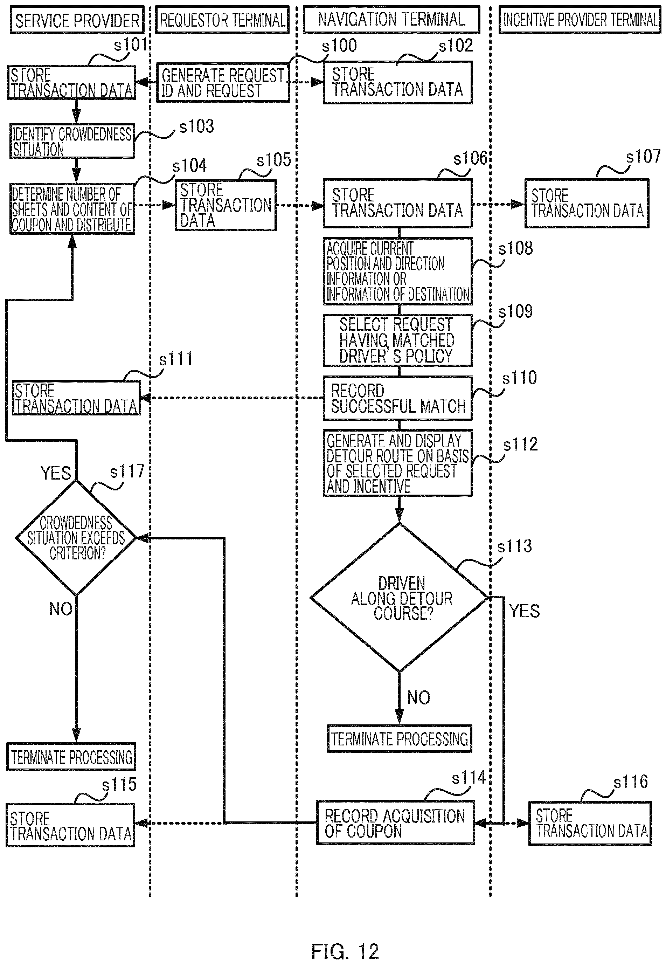

FIG. 12 illustrates an exemplary flow 1 of the congestion avoidance support method according to the present embodiment. Here, the requestor terminal 200 first receives a predetermined instruction by the user from the input device 205, generates a request to avoid congestion, and issues transaction data including the request to the network 1 (s100).

Here, the transmitted transaction data of the request is assumed to include values similar to those in the record of the request information 51 already illustrated in FIG. 10A (however, values of the request ID and the coupon ID are not included).

On the other hand, the service provider apparatus 100 and the navigation terminal 300 receive the transaction data of the request and, after having performed validity determination relating thereto, store the transaction data in the request information 51 of the distributed ledger 50 (s101 and s102).

In addition, the crowdedness information management unit 111 of the service provider apparatus 100, upon receiving the aforementioned request (included in the transaction data), acquires information of the road crowdedness situation in the area requested to be detoured indicated by the request, from an external system of a predetermined organization such as an autonomous community or a public corporation bearing responsibility of road management. (s103).

In addition, the coupon issuing unit 110 of the service provider apparatus 100 identifies the number of sheets and the content of the coupon using a predetermined algorithm, on the basis of the aforementioned area requested to be detoured and information of the road crowdedness situation acquired at s103, and issues the coupon to the network 1 as transaction data (s104). The transaction data is supposed to be received at least by the navigation terminal 300 and the incentive provider terminal 400. The processes of generating/issuing transaction data as described above is assumed to be performed similarly to an existing technique in the distributed ledger system (and so forth).

Note that the aforementioned algorithm corresponds to a function defining a correlation between an input and an output, with the input being the past road crowdedness situation for each area and the number of sheets and the content of the coupon actually distributed in the road crowdedness situation, and the output being the congestion moderation situation after distribution of the coupon in the corresponding area. The function is one acquired by performing correlation analysis between the input and the output. It goes without saying that the algorithm is merely an example, and various types of algorithms defining the correlation via machine learning may be employed as appropriate.

On the other hand, the navigation terminal 300, the incentive provider terminal 400, and the requestor terminal 200 receive the aforementioned transaction data relating to the number of sheets and the content of the coupon, and after having performed a predetermined validity determination thereof, store the transaction data respectively in the coupon information 52 of the distributed ledger 50 (s105 to s107).

The aforementioned transaction data turn out to be data having the same data structure as the records of the coupon issuance information 521 already illustrated in FIG. 10B. However, since the coupon is just issued and lacks history of use, the value of the number-of-sheets-used column is 0, unlike the records illustrated in FIG. 10B.

Subsequently, the policy matching execution unit 310 of the navigation terminal 300 acquires respective pieces of information of the current position and the running direction of the vehicle of interest output from the GPS unit 308, and destination information (naturally held in a general navigation device) which has been set by the driver for navigation thereto (s108).

In addition, the policy matching execution unit 310 of the navigation terminal 300 identifies, among the requests acquired at s102 (in this case, synonymous with coupons whose information has been acquired at s105), a request in which what to be avoided during congestion in the request such as a period requested to be detoured or an area requested to be detoured matches the driver's actual travel trend (e.g., a case where an area at the end of the direction in which a vehicle of interest is running with the starting point being the current position of the vehicle acquired at s108 either (a) strictly coincides with the area requested to be detoured, or (b) does not strictly coincide with the area requested to be detoured but the area requested to be detoured is reachable provided that there is a change of direction to a predetermined degree on the way), and also the request type ID in the request and the policy ID of the driver's travel policy (the policy information 3253 of the driver DB 325) satisfies the relation defined by the matching candidate information 531 of the matching information 53 in the distributed ledger 50 (s109).

Subsequently, the policy matching execution unit 310 of the navigation terminal 300, upon identifying the request at s109 described above, issues transaction data including the identified request to the network 1 and, after having performed a predetermined validity determination thereof, stores the transaction data in the matching result information 532 of the distributed ledger 50 (s110). The transaction data stored here has a data structure associating together respective pieces of information of the corresponding request ID, driver ID, and policy ID, similarly to the matching result information 532 already illustrated in FIG. 11B.

On the other hand, the service provider apparatus 100 receives the transaction data of the matching result issued from the navigation terminal 300 and, after having performed a predetermined validity determination thereof, stores the transaction data in the matching result information 532 of the distributed ledger 50 (sill).

Next, the route generating unit 311 of the navigation terminal 300 identifies a detour route to arrive at the original destination and outputs information of the detour route to the output device 306 (s112), while avoiding the area requested to be detoured during the period requested to be detoured, on the basis of the period requested to be detoured and the area requested to be detoured in the request information 51 of the request identified at s109 described above, and the current position and the running direction acquired at s108.

Subsequently, the driver-action processing unit 312 of the navigation terminal 300 extracts the driver's travel history from the travel lifelog information 3252 at each of predetermined time points, and determines whether or not the travel history conforms to the detour route identified at s112 (s113).

When it is found as a result of the aforementioned determination that the driver's travel history does not conform to the detour route (NO at s113), the driver-action processing unit 312 of the navigation terminal 300 terminates the process.

When, on the other hand, it is found as a result of the aforementioned determination that the driver's travel history conforms to the detour route (YES at s113) the driver-action processing unit 312 of the navigation terminal 300 determines to acquire the coupon in accordance with the driver's detouring behavior and, after having performed validity determination thereof, issues transaction data indicating acquisition of the coupon, stores the transaction data in the coupon acquisition information 522 of the distributed ledger 50 (s114).

On the other hand, the service provider apparatus 100 and the incentive provider terminal 400 receive the transaction data relating to the coupon acquisition described above and, after having performed validity determination thereof, store the transaction data in the coupon acquisition information 522 of the distributed ledger 50 (s115 and s116).

In the aforementioned case, the crowdedness information management unit 111 of the service provider apparatus 100 performs the process of s103 again, upon receiving the transaction data relating to the coupon acquisition described above, and determines whether or not the road crowdedness situation in the aforementioned area requested to be detoured indicates a predetermined crowdedness criterion (s117).

When it is found as a result of the aforementioned determination that the road crowdedness situation in the aforementioned area requested to be detoured falls below a predetermined crowdedness criterion (NO at s117), the coupon issuing unit 110 of the service provider apparatus 100 terminates the process.

When, on the other hand, it is found as a result of the aforementioned determination that the road crowdedness situation in the area requested to be detoured exceeds a predetermined crowdedness criterion (YES at s117), the coupon issuing unit 110 of the service provider apparatus 100 advances the process flow to s104, and performs respective processes of identifying the number of sheets and the content of the coupon and issuing the transaction data again.

The foregoing turns out to be a process of determining that the request from the requestor has been realized in a case where the road crowdedness situation of the area requested to be detoured has improved after the driver's acquiring the coupon, i.e., taking the detouring behavior, or, in a case where no improvement is seen in the road crowdedness situation even when the driver has made a detouring behavior, satisfying the aforementioned request by, for example, issuing additional sheets of the coupon or a coupon with an increased discount amount.

Note that, although a case is described in the aforementioned example where execution of step s117 is triggered by receiving the transaction data relating to acquiring the coupon, s117 may be performed upon receiving the transaction data of the matching result at s110.

### --- Exemplary Flow 2 ---

Subsequently, there will be described a process performed by the congestion avoidance support system 10 as indicated at step s114 in the exemplary flow 1, in a case where the driver who has acquired a coupon by making a detouring behavior uses the coupon by making a purchasing action such as visiting the store of the incentive provider.

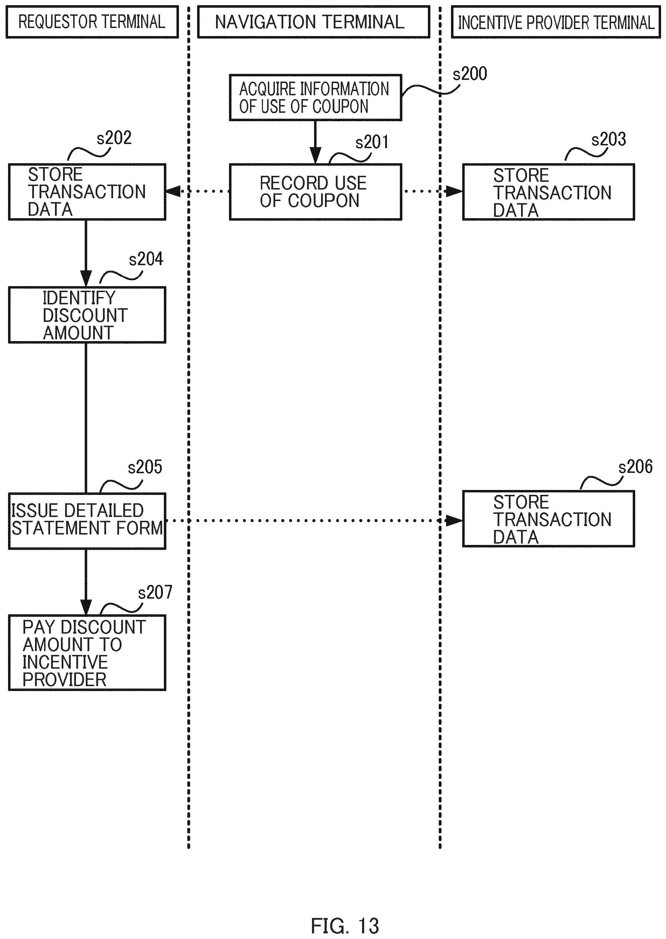

FIG. 13 illustrates an exemplary flow 2 of the congestion avoidance support method of the present embodiment. In the aforementioned case, the navigation terminal 300 installed in the driver's car acquires history information of the use of the coupon by accepting the driver's operation at the input device 305, or receiving, from the incentive provider terminal 400, information relating to the content of purchase via the communication device 307 (s200).

In addition, the navigation terminal 300 issues transaction data relating to the use of the coupon and, after having performed validity determination thereof, stores the transaction data in the use-of-coupon information 523 of the distributed ledger 50 (s201).

On the other hand, the requestor terminal 200 and the incentive provider terminal 400 receive transaction data relating to the use of the coupon and, after having performed validity determination thereof, store the transaction data in the use-of-coupon information 523 of the distributed ledger 50 (s202 and s203).

Subsequently, the requestor terminal 200, upon receiving the aforementioned transaction data, extracts a value of the discount amount by the coupon generated by the purchasing behavior indicated by the transaction data, as the amount of reward to the incentive provider successively (s204).

It goes without saying that the value of such a discount amount is merely an example of the amount of reward, and the amount of reward may be specified on the basis of a predetermined rule in accordance with the size of the discount amount.

Subsequently, the requestor terminal 200 issues transaction data of a detailed statement form including the discount amount acquired at s204 and, after having performed validity determination thereof, stores the transaction data in the detailed statement information 54 of the distributed ledger 50 (s205) .

On the other hand, the incentive provider terminal 400 receives the aforementioned transaction data of the detailed statement form and, after having performed validity determination thereof, stores the transaction data in the detailed statement information 54 of the distributed ledger 50 (s206).

Next, the requestor terminal 200 performs a predetermined financial process of paying the discount amount, i.e., the amount of reward identified at s204 to the incentive provider (s207), and terminates the process. It goes without saying that, when performing such a financial process, the requestor terminal 200 is assumed to have preliminarily held therein information of bank accounts possessed by business operators providing the incentive, and perform a financial process such as money transfer via a net banking service of a financial institution as appropriate, on the basis of the information.

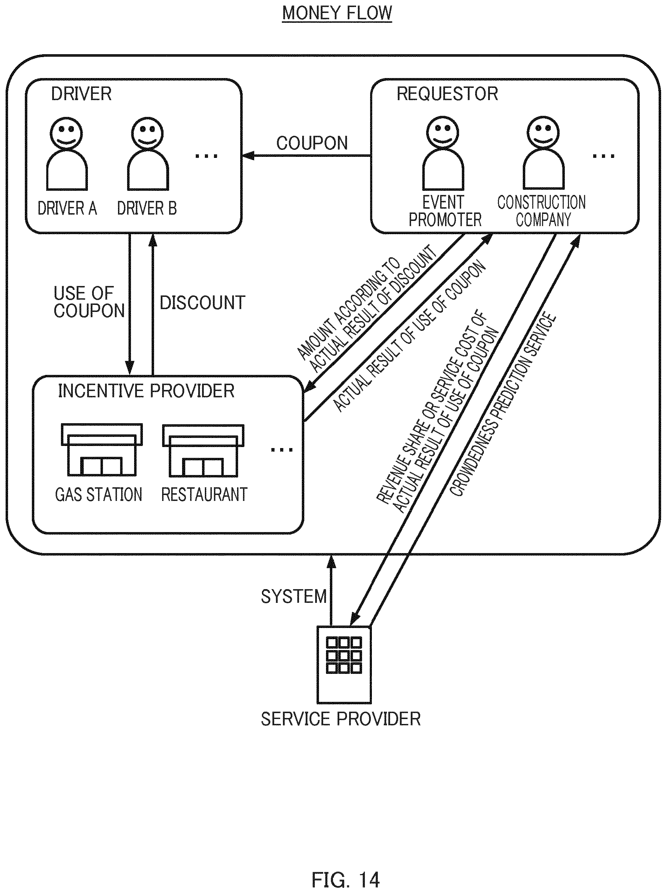

Here, FIG. 14 illustrates a money flow corresponding to the flow of the aforementioned congestion avoidance support method. As illustrated in the money flow, the requestor issues a coupon, as seen from the driver, who is supposed to use the coupon to receive a discount at a store or the like of the incentive provider. In addition, information of the discount amount at the aforementioned occasion is notified as an actual result of the use of the coupon from the incentive provider terminal 400 to the requestor terminal 200 as appropriate, whereby payment of reward is made from the requestor to the incentive provider in accordance with the actual result. On the other hand, there is realized a business model such that the service provider, which is an entity that provides a place of congestion avoidance support service to such requestors, drivers, incentive providers or the like, collects expenses from the requestors in accordance with the use of the service.

Although a best mode for implementing the present invention has been specifically described above, the present invention is not limited thereto and may be modified within the scope of the appended claims.

According to the aforementioned embodiments, it becomes possible to provide an effective incentive so as to efficiently achieve congestion avoidance, while taking into consideration trend and policy of travelers as well as road situation.

According to the description of the present specification, at least the following will become clear. In other words, the congestion avoidance support system of the present embodiment includes a plurality of traveler terminals, each traveler terminal provided with a storage device storing a traveler's travel policy, and an arithmetic device configured to perform a process of receiving respective pieces of information of incentives and requests corresponding thereto from the information processing apparatus and identifying one, among the incentives, that exhibits a match between what to be avoided during congestion in the request and the traveler's actual travel trend, and also a match between a predetermined property in the request and the travel policy, a process of identifying a detour route on the basis of the request corresponding to the identified incentive and outputting information of the detour route to an output device and, a process of holding a message that the traveler has acquired the incentive in the storage device when it turns out that the traveler's travel history conforms to the detour route, and notifying the message to the processing information apparatus.

Consequently, it is possible to avoid an operational form such that the aforementioned information processing apparatus (service provider apparatus) identifies a coupon that matches the traveler's travel trend or policy, generates/displays a detour route, or notifies coupon acquisition, while gathering information by communicating with the traveler terminal. Therefore, it becomes possible to reduce the time and cost required for such communication from the service provider's viewpoint, which allows for an effective congestion avoidance support. Eventually, it becomes possible to provide an effective incentive so as to efficiently achieve congestion avoidance, while taking into consideration trend and policy of travelers as well as road situation.

In addition, the congestion avoidance support system of the present embodiment includes a business operator terminal, which is a terminal of the predetermined business operator, the business operator terminal being configured to receive a notification from a traveler terminal with regard to a purchasing behavior made by a traveler corresponding to said traveler terminal on the basis of the incentive, and perform a predetermined payment process relating to an achievement reward based on the content of the purchasing behavior, for a store at which the purchasing behavior has been made.

Consequently, it is possible to efficiently provide the incentive provider (e.g., various stores such as gas stations or restaurants used by travelers) with the discount amount by the coupon for an achievement reward, in accordance with the traveler's using the coupon. Therefore, from the viewpoint of the incentive provider, the foregoing may easily lead to maintaining or increasing motivation that encourages the traveler's using the coupon, which may allow for an effective congestion avoidance support, as a result. Eventually, it becomes possible to provide an effective incentive so as to efficiently achieve congestion avoidance, while taking into consideration trend and policy of travelers as well as road situation.

In addition, the congestion avoidance support system of the present embodiment is configured so that the information processing apparatus, the business operator terminal, and the plurality of traveler terminals are respectively nodes included in a distributed ledger system, each node performing predetermined validity determination of transaction data issued in accordance with respective processes in respective nodes triggered by the requests to avoid congestion avoidance, and subsequently holding the transaction data respectively in the distributed ledger system.

Consequently, it is possible to configure a distributed ledger system with devices and terminals included in the congestion avoidance support system being nodes, and manage transaction data indicating the content of respective processes at respective nodes on the distributed ledger without concern of falsification, after having performed validity determination thereof. In addition, introduction and operation of a centralized management apparatus becomes basically unnecessary, whereby it becomes easier to construct and introduce a congestion avoidance support system. Therefore, it becomes possible to provide an efficient and economic congestion avoidance support. Eventually, it becomes possible to provide an effective incentive so as to achieve congestion avoidance more efficiently at a lower cost, while taking into consideration trend and policy of travelers as well as road situation.

In addition, the congestion avoidance support method of the present embodiment causes a traveler terminal provided with a storage device storing a traveler's travel policy to receive respective pieces of information of the incentives and the requests corresponding thereto from the information processing apparatus, identify one, among the incentives, that exhibits a match between what to be avoided during congestion in the request and the traveler's actual travel trend, and also a match between a predetermined property in the request and the travel policy, identify a detour route on the basis of the request corresponding to the identified incentive, output information of the detour route to an output device and, hold a message that the traveler has acquired the incentive in the storage device when it turns out that the traveler's travel history conforms to the detour route, and notify the message to the information processing apparatus.

In addition, the congestion avoidance support method of the present embodiment causes the information processing apparatus to receive a notification from the traveler terminal with regard to a purchasing behavior made by a traveler corresponding to the traveler terminal on the basis of the incentive, and perform a predetermined payment process relating to an achievement reward based on the content of the purchasing behavior, for a store at which the purchasing behavior has been made.

In addition, the congestion avoidance support method of the present embodiment causes the information processing apparatus, the business operator terminal, and the traveler terminals, which are respectively nodes included in a distributed ledger system, to respectively perform predetermined validity determination of transaction data issued in accordance with respective processes in respective nodes triggered by the requests to avoid congestion avoidance, and subsequently hold the transaction data respectively in the distributed ledger system.

## Claims

1. A congestion avoidance support system comprising
an information processing apparatus (100),
a plurality of traveler terminals of respective travelers (300) and
a business operator terminal (200) of a predetermined business operator;
wherein the information processing apparatus is provided with:
a storage device (101) storing information of the respective travelers; and
an arithmetic device (104) configured to receive (s101) a request to avoid congestion from the business operator terminal of the predetermined business operator,
identify (s102, s103) content of an incentive using a predetermined algorithm on the basis of a road to be avoided during congestion in the request and crowdedness situation of the road,
distribute (s104) information of the incentive to the traveler terminal of each traveler on the basis of the information of respective travelers and,
upon receiving (s111), after the distribution, a notification from any of the traveler terminals of the respective travelers that the traveler has moved in accordance with the request and therefore acquired the incentive (s113, s115),
perform each of the processes of identifying the content of the incentive and distributing the information of the incentive again, when the crowdedness situation of the road to be avoided during congestion indicates a predetermined degree of crowdedness (s117);
wherein each of the traveler terminals is provided with:
an output device (306);
a traveler terminal storage device (301) storing a traveler's travel policy;
a traveler terminal arithmetic device (304) configured to perform a process of receiving (s106) respective pieces of information of incentives and requests corresponding thereto from the information processing apparatus and identifying (s108, s109) one, among the incentives, that exhibits a match between an area and/or a period to be avoided during congestion in the request and the traveler's actual travel trend, and also a match between a predetermined property in the request and the travel policy,
a process of identifying (s112) a detour route on the basis of the request corresponding to the identified incentive and outputting information of the detour route to the output device (306), and
a process of holding (s114) a message that the traveler has acquired the incentive in the storage device when it turns out that the traveler's travel history conforms to the detour route, and notifying (s115) the message to the information processing apparatus; and
wherein the business operator terminal is configured to receive (s202) a notification from a traveler terminal with regard to a purchasing behavior made by a traveler corresponding to said traveler terminal on the basis of the incentive, and
perform (s205, s207) a predetermined payment process relating to an achievement reward based on the content of the purchasing behavior, for a store at which the purchasing behavior has been made; and
wherein the information processing apparatus, the business operator terminal, and the plurality of traveler terminals are respectively nodes included in a distributed ledger system (50), each node adapted to perform predetermined validity determination of transaction data issued in accordance with respective processes in respective nodes triggered by the requests to avoid congestion, and to subsequently hold the transaction data respectively in the distributed ledger system.

2. A congestion avoidance support method causing an information processing apparatus (100) provided with a storage device (104) storing information of respective travelers to:
receive (s101) a request to avoid congestion from a business operator terminal (200) of a predetermined business operator;
identify (s102, s103) content of an incentive using a predetermined algorithm on the basis of a road to be avoided during congestion in the request and crowdedness situation of the road;
distribute (s104) information of the incentive to a traveler terminal (200) of each traveler on the basis of the information of respective travelers; and
upon receiving (s111), after the distribution, a notification from any of the traveler terminals of the respective travelers that the traveler has moved in accordance with the request and therefore acquired the incentive (s113), perform each of the processes of identifying the content of the incentive and distributing the information of the incentive again, when the crowdedness situation of the road to be avoided during congestion indicates a predetermined degree of crowdedness (s117);
wherein the method causes the traveler terminal of each traveler, which is provided with a storage device storing the traveler's travel policy, and an output device (306), to:
receive (s106) information of incentives from the information processing apparatus;
identify (s108, s109) one, among the incentives, that exhibits a match between an area and/or a period to be avoided during congestion in the request and the traveler's actual travel trend, and also a match between a predetermined property in the request and the travel policy;
identify (s112) a detour route on the basis of the request corresponding to the identified incentive;
output (s112) information of the detour route to the output device (306); and
hold (s114) a message that the traveler has acquired the incentive in the storage device when it turns out that the traveler's travel history conforms to the detour route, and notify (s115) the message to the information processing apparatus;
wherein the method causes the business operator terminal to:
receive (s202) a notification from a traveler terminal with regard to a purchasing behavior made by a traveler corresponding to said traveler terminal on the basis of the incentive, and
perform (s205, s207) a predetermined payment process relating to an achievement reward based on the content of the purchasing behavior, for a store at which the purchasing behavior has been made; and
wherein the method causes the information processing apparatus, the business operator terminal, and the traveler terminals which are respectively nodes included in a distributed ledger system (50), to respectively perform predetermined validity determination of transaction data issued in accordance with respective processes in respective nodes triggered by the requests to avoid congestion, and subsequently hold the transaction data respectively in the distributed ledger system.

## Patentansprüche

1. Stauvermeidungsunterstützungssystem, umfassend:
eine Informationsverarbeitungsvorrichtung (100),
mehrere Reisenden-Terminals von jeweiligen Reisenden (300) und
ein Dienstleister-Terminal (200) eines vorgegebenen Dienstleisters;
wobei die Informationsverarbeitungsvorrichtung mit Folgendem ausgestattet ist:
einer Speichereinrichtung (101), die Informationen der jeweiligen Reisenden speichert; und
einer Arithmetik-Einrichtung (104), die dazu ausgelegt ist,
eine Anfrage nach Stauvermeidung vom Dienstleister-Terminal des vorgegebenen Dienstleisters zu empfangen (s101),
den Inhalt eines Anreizes unter Verwendung eines vorgegebenen Algorithmus auf der Grundlage einer während Stau zu vermeidenden Straße in der Anfrage und der Überfülltheitssituation der Straße zu identifizieren (s102, s103),
Informationen des Anreizes an das Reisenden-Terminal jedes Reisenden auf der Grundlage der Informationen der jeweiligen Reisenden zu verteilen (s104) und
nach dem Verteilen beim Empfangen (s111) einer Benachrichtigung von irgendeinem der Reisenden-Terminals der jeweiligen Reisenden, dass der Reisende sich gemäß der Anfrage bewegt hat und daher den Anreiz erhalten hat (s113, s115), jeden der Vorgänge des Identifizierens des Inhalts des Anreizes und des Verteilens der Information des Anreizes erneut auszuführen, wenn die Überfülltheitssituation der während Stau zu vermeidenden Straße einen vorgegebenen Grad an Überfülltheit anzeigt (s117);
wobei jedes der Reisenden-Terminals mit Folgendem ausgestattet ist:
einer Ausgabeeinrichtung (306);
einer Reisenden-Terminal-Speichereinrichtung (301), die eine Reisestrategie eines Reisenden speichert;
einer Reisenden-Terminal-Arithmetik-Einrichtung (304), die dazu eingerichtet ist, Folgendes auszuführen:
einen Vorgang des Empfangens (s106) jeweiliger Teile von Informationen von Anreizen und diesen entsprechenden Anfragen von der Informationsverarbeitungsvorrichtung und des Identifizierens (s108, s109) eines unter den Anreizen, der eine Übereinstimmung zwischen einem Bereich und/oder einem Zeitraum, die während Stau zu vermeiden sind, in der Anfrage und der aktuellen Reiserichtung des Reisenden und ebenfalls eine Übereinstimmung zwischen einer vorgegebenen Eigenschaft in der Anfrage und der Reisestrategie darstellt,
einen Vorgang des Identifizierens (s112) einer Umwegroute auf der Grundlage der Anfrage, die dem identifizierten Anreiz entspricht, und des Ausgebens von Informationen der Umwegroute an die Ausgabeeinrichtung (306) und
einen Vorgang des Haltens (s114) einer Nachricht, dass der Reisende den Anreiz erhalten hat, in der Speichereinrichtung, wenn sich herausstellt, dass die Reisehistorie des Reisenden mit der Umwegroute übereinstimmt, und des Zustellens (s115) der Nachricht an die Informationsverarbeitungsvorrichtung; und
wobei das Dienstleister-Terminal zu Folgendem eingerichtet ist:
eine Benachrichtigung eines Reisenden-Terminals bezüglich eines Kaufverhaltens, das ein Reisender entsprechend dem Reisenden-Terminal auf der Grundlage des Anreizes gezeigt hat, zu empfangen und
einen vorgegebenen Zahlungsvorgang, der auf eine Erlangungsbelohnung auf der Grundlage des Inhalts des Kaufverhaltens bezieht, für einen Laden, in dem das Kaufverhalten gezeigt wurde, auszuführen, und
wobei die Informationsverarbeitungsvorrichtung, das Dienstleister-Terminal und die mehreren Reisenden-Terminals jeweils Knoten in einem verteilten Registersystem (50) sind, wobei jeder Knoten dazu ausgelegt ist, eine vorgegebene Gültigkeitsbestimmung von Transaktionsdaten, die gemäß den jeweiligen Vorgängen in durch die Anfragen zur Stauvermeidung angestoßenen Knoten ausgegeben worden sind, auszuführen und daraufhin jeweils die Transaktionsdaten im verteilten Registersystem zu halten.

2. Stauvermeidungsunterstützungsverfahren, das eine Informationsverarbeitungseinheit (100), die mit einer Informationen von jeweiligen Reisenden speichernden Speichereinrichtung (104) ausgestattet ist, Folgendes ausführen lässt:
eine Anfrage zur Stauvermeidung von einem Dienstleister-Terminal (200) eines vorgegebenen Dienstleisters zu empfangen (s101);
den Inhalt eines Anreizes unter Verwendung eines vorgegebenen Algorithmus auf der Grundlage einer während Stau zu vermeidenden Straße in der Anfrage und der Überfülltheitssituation der Straße zu identifizieren (s102, s103);
Informationen des Anreizes an ein Reisenden-Terminal (200) jedes Reisenden auf der Grundlage der Informationen der jeweiligen Reisenden zu verteilen (s104) und
nach der Verteilung beim Empfangen (s111) einer Benachrichtung von irgendeinem der Reisenden-Terminals der jeweiligen Reisenden, dass sich der Reisende gemäß der Anfrage bewegt hat und daher den Anreiz erhalten hat (s113), jeden der Vorgänge des Identifizierens des Inhalts des Anreizes und des Verteilens der Information des Anreizes erneut auszuführen, wenn die Überfülltheitssituation der während Stau zu vermeidenden Straße einen vorgegebenen Grad an Überfülltheit angibt (s117);
wobei das Verfahren das Reisenden-Terminal jedes Reisenden, das mit einer die Reisestrategie des Reisenden speichernden Speichereinrichtung und einer Ausgabeeinrichtung (306) ausgestattet ist, Folgendes ausführen lässt:
Informationen von Anreizen von der Informationsverarbeitungsvorrichtung zu empfangen (s106);
einen unter den Anreizen, die eine Übereinstimmung zwischen einem Bereich und/oder einem Zeitraum, die während Stau zu vermeiden sind, in der Anfrage und der aktuellen Reiserichtung des Reisenden und ebenfalls eine Übereinstimmung zwischen einer vorgegebenen Eigenschaft in der Anfrage und der Reisestrategie zu identifizieren (s108, s109);
eine Umwegroute auf der Grundlage der Anfrage, die dem identifizierten Anreiz entspricht, zu identifizieren (s112);
Informationen der Umwegroute an die Ausgabeeinrichtung (306) auszugeben (s112), und
eine Nachricht, dass der Reisende den Anreiz erhalten hat, in der Speichereinrichtung zu halten (s114), wenn sich herausstellt, dass die Reisehistorie des Reisenden mit der Umwegroute übereinstimmt, und die Nachricht an die Informationsverarbeitungsvorrichtung zuzustellen (s115);
wobei das Verfahren das Dienstleister-Terminal Folgendes ausführen lässt:
eine Benachrichtung eines Reisenden-Terminals bezüglich eines Kaufverhaltens, das ein Reisender entsprechend dem Reisenden-Terminal auf der Grundlage des Anreizes gezeigt hat, zu empfangen (s202), und
einen vorgegebenen Zahlungsvorgang, der sich auf eine Erlangungsbelohnung auf der Grundlage des Inhalts des Kaufverhaltens bezieht, für einen Laden, bei dem das Kaufverhalten gezeigt wurde, auszuführen (s205, s207); und
wobei das Verfahren die Informationsverarbeitungsvorrichtung, das Dienstleister-Terminal und die Reisenden-Terminals, die jeweils Knoten in einem verteilten Registersystem (50) sind, jeweils vorgegebene Gültigkeitsbestimmung von Transaktionsdaten, die gemäß den jeweiligen Vorgängen in jeweiligen durch die Anfragen zur Stauvermeidung angestoßenen Knoten ausgegeben worden sind, ausführen lässt und daraufhin die Transaktionsdaten jeweils im verteilten Registersystem halten lässt.

## Revendications

1. Système de support d'évitement d'embouteillage comprenant
un appareil (100) de traitement d'informations,
une pluralité de terminaux de voyageurs de voyageurs (300) respectifs et
un terminal (200) d'opérateur d'entreprise d'un opérateur d'entreprise prédéterminé ;
dans lequel l'appareil de traitement d'informations est prévu avec :
un dispositif (101) de stockage stockant des informations sur les voyageurs respectifs ; et
un dispositif arithmétique (104) configuré pour
recevoir (s101) une demande pour éviter un embouteillage depuis le terminal d'opérateur d'entreprise de l'opérateur d'entreprise prédéterminé,
identifier (s102, s103) un contenu d'une incitation en utilisant un algorithme prédéterminé sur la base d'une route devant être évitée lors de l'embouteillage dans la demande et d'une situation d'encombrement de la route,
distribuer (s104) des informations relatives à l'incitation jusqu'au terminal de voyageur de chaque voyageur sur la base des informations des voyageurs respectifs et,
à la réception (s111), après la distribution, d'une notification depuis l'un quelconque des terminaux de voyageurs des voyageurs respectifs que le voyageur s'est déplacé conformément à la demande et a donc acquis l'incitation (s113, s115), mettre en œuvre chacun des processus d'identification du contenu de l'incitation et de distribution des informations relatives à l'incitation à nouveau, lorsque la situation d'encombrement de la route devant être évitée lors de l'embouteillage indique un degré prédéterminé d'encombrement (s117) ;
dans lequel chacun des terminaux de voyageurs est prévu avec :
un dispositif (306) de délivrance en sortie ;
un dispositif (301) de stockage de terminal de voyageur stockant une politique de voyage du voyageur ;
un dispositif arithmétique (304) de terminal de voyageur configuré pour mettre en œuvre
un processus de réception (s106) d'éléments respectifs d'informations d'incitations et de demandes correspondant à ceux-ci depuis l'appareil de traitement d'informations et d'identification (s108, s109) d'une, parmi les incitations, qui montre une correspondance entre une zone et/ou une période devant être évitée(s) lors de l'embouteillage dans la demande et la tendance de déplacement actuelle du voyageur, et également une correspondance entre une propriété prédéterminée dans la demande et la politique de voyage,
un processus d'identification (s112) d'un itinéraire de déviation sur la base de la demande correspondant à l'incitation identifiée et de délivrance en sortie d'informations relatives à l'itinéraire de déviation jusqu'au dispositif (306) de délivrance en sortie, et
un processus de conservation (s114) d'un message indiquant que le voyageur a acquis l'incitation dans le dispositif de stockage lorsqu'il s'avère que l'historique de voyage du voyageur est conforme à l'itinéraire de déviation, et de notification (s115) du message à l'appareil de traitement d'informations ; et
dans lequel le terminal d'opérateur d'entreprise est configuré pour
recevoir (s202) une notification depuis un terminal de voyageur se rapportant à un comportement d'achat effectué par un voyageur correspondant audit terminal de voyageur sur la base de l'incitation, et
exécuter (s205, s207) un processus de paiement prédéterminé relatif à une récompense de réalisation sur la base du contenu du comportement d'achat, pour un magasin dans lequel le comportement d'achat a été effectué ; et
dans lequel l'appareil de traitement d'informations, le terminal d'opérateur d'entreprise, et la pluralité de terminaux de voyageurs sont respectivement des nœuds inclus dans un système de registre distribué (50), chaque nœud adapté à exécuter une détermination de validité prédéterminée de données de transaction émises en fonction de processus respectifs dans des nœuds respectifs déclenchés par les demandes pour éviter un embouteillage, et à ensuite conserver les données de transaction respectivement dans le système de registre distribué.

2. Procédé de support d'évitement d'embouteillage amenant un appareil (100) de traitement d'informations prévu avec un dispositif (104) de stockage stockant des informations sur des voyageurs respectifs à :
recevoir (s101) une demande pour éviter un embouteillage depuis un terminal (200) d'opérateur d'entreprise d'un opérateur d'entreprise prédéterminé ;
identifier (s102, s103) un contenu d'une incitation en utilisant un algorithme prédéterminé sur la base d'une route devant être évitée lors de l'embouteillage dans la demande et d'une situation d'encombrement de la route ;
distribuer (s104) des informations relatives à l'incitation jusqu'à un terminal (200) de voyageur de chaque voyageur sur la base des informations des voyageurs respectifs ; et
à la réception (s111), après la distribution, d'une notification depuis l'un quelconque des terminaux de voyageurs des voyageurs respectifs que le voyageur s'est déplacé conformément à la demande et a donc acquis l'incitation (s113), mettre en œuvre chacun des processus d'identification du contenu de l'incitation et de distribution des informations relatives à l'incitation à nouveau, lorsque la situation d'encombrement de la route devant être évitée lors de l'embouteillage indique un degré prédéterminé d'encombrement (s117) ;
dans lequel le procédé amène le terminal de voyageur de chaque voyageur, qui est prévu avec un dispositif de stockage stockant la politique de voyage du voyageur, et un dispositif (306) de délivrance en sortie, à :
recevoir (s106) des informations d'incitations depuis l'appareil de traitement d'informations ;
identifier (s108, s109) une, parmi les incitations, qui montre une correspondance entre une zone et/ou une période devant être évitée(s) lors de l'embouteillage dans la demande et la tendance de déplacement actuelle du voyageur, et également une correspondance entre une propriété prédéterminée dans la demande et la politique de voyage ;
identifier (s112) un itinéraire de déviation sur la base de la demande correspondant à l'incitation identifiée ;
délivrer en sortie (s112) des informations relatives à l'itinéraire de déviation jusqu'au dispositif (306) de délivrance en sortie ; et
conserver (s114) un message indiquant que le voyageur a acquis l'incitation dans le dispositif de stockage lorsqu'il s'avère que l'historique de voyage du voyageur est conforme à l'itinéraire de déviation, et notifier (s115) le message à l'appareil de traitement d'informations ;
dans lequel le procédé amène le terminal d'opérateur d'entreprise à :
recevoir (s202) une notification depuis un terminal de voyageur se rapportant à un comportement d'achat effectué par un voyageur correspondant audit terminal de voyageur sur la base de l'incitation, et
exécuter (s205, s207) un processus de paiement prédéterminé relatif à une récompense de réalisation sur la base du contenu du comportement d'achat, pour un magasin dans lequel le comportement d'achat a été effectué ; et
dans lequel le procédé amène l'appareil de traitement d'informations, le terminal d'opérateur d'entreprise, et les terminaux de voyageurs qui sont respectivement des nœuds inclus dans un système de registre distribué (50), à respectivement exécuter une détermination de validité prédéterminée de données de transaction émises en fonction de processus respectifs dans des nœuds respectifs déclenchés par les demandes pour éviter un embouteillage, et à ensuite conserver les données de transaction respectivement dans le système de registre distribué.
